# FASCICULE DE BREVET EUROPEEN

(11) **EP 0 415 815 B1**
(45) Date de publication et mention de la délivrance du brevet: **01.12.1993**
(21) Numéro de dépôt: 90402307.4
(22) Date de dépôt: 17.08.1990
(51) Int. Cl.: G01T 1/17

(54) **Procédé de correction des signaux d'un détecteur linéaire de radiations et dispositif de correction mettant en oeuvre ce procédé**
Verfahren zur Korrektur der Signale von einem linearen Strahlungsdetektor und Korrekturvorrichtung zur Anwendung dieses Verfahrens
Signal connection procedure for a linear radiation detector and apparatus therefor

(30) Priorité: 22.08.1989 FR 8911105
(43) Date de publication de la demande: 06.03.1991
(73) Titulaire: THOMSON TUBES ELECTRONIQUES, 92100 Boulogne-Billancourt (FR)
(72) Inventeur: ROZIERE, Guy, F-92045 Paris la Défense (FR); PETIT, Paul, F-92045 Paris la Défense (FR)
(74) Mandataire: Guérin, Michel

(56) Documents cités:
- EP-A- 0 250 757
- EP-A- 0 346 878
- FR-A- 2 570 507
- US-A- 4 341 956

## Description

L'invention se rapporte à un procédé de correction des signaux de mesure fournis par un détecteur de radiations du type détecteur à barrette. Elle concerne également un dispositif de correction dans lequel ce procédé est mis en oeuvre.

Des détecteurs de radiation du type barrette peuvent être utilisés pour capter différents types de rayonnement, par exemple lumière, radiations X, radiations alpha, bêta, gamma, neutrons, etc...

Ces détecteurs sont généralement constitués par des capteurs élémentaires disposés les uns derrière les autres le plus souvent selon une seule ligne. Ces capteurs élémentaires sont fréquemment du type photosensible, et dans le cas de radiations autres que la lumière, un élément convertisseur d'énergie en énergie lumineuse est interposé entre ces photodétecteurs et la source de rayonnement, l'élément convertisseur ou scintillateur étant une substance appropriée à la nature du rayonnement.

L'une des applications importante des détecteurs barrette ou détecteurs linéaires est l'imagerie à balayage. L'imagerie à balayage avec de tels détecteurs est utilisée notamment dans les cas suivants :
- pour des objets en mouvement de translation, par exemple tapis roulant de chaîne de production;
- dans le cas ou une très grande dynamique de détection est indispensable : les détecteurs linéaires ou détecteurs barrettes sont alors préférables aux détecteurs de type matriciel ou surfacique dans lesquels les surfaces photosensibles sont réduites afin notamment de réserver une surface nécessitée par la présence de nombreux conducteurs disposés en lignes et en colonnes;
- dans le cas d'objets de grande dimension, cas dans lequel il est possible d'utiliser des détecteurs linéaires modulaires et raboutables;
- dans le cas des rayons X, aussi bien dans les techniques industrielles que dans le radiodiagnostic : la radiologie à balayage est intéressante particulièrement du fait qu'elle permet d'obtenir une excellente réjection du rayonnement diffusé.

En prenant pour exemple les détecteurs type barrette ou détecteurs linéaires utilisés pour l'imagerie à balayage par rayons X, par exemple pour la reconnaissance d'objet en mouvement sur des tapis roulants comme dans les installations de contrôle de bagages couramment rencontrés dans les aéroports :
- le détecteur linéaire est souvent fixe, et il est constitué d'une pluralité de capteurs élémentaires, disposés selon une même ligne qui est sensiblement perpendiculaire au sens de déplacement des objets ;
- une source de rayons X est disposée de manière que le tapis roulant passe entre cette source et le détecteur linéaire;
- le rayonnement X émis par la source passe par des moyens de collimation qui lui confèrent la forme d'un faisceau en éventail dont le plan est disposé selon la longueur du détecteur linéaire;
- fréquemment le scintillateur est constitué au niveau de chaque capteur élémentaire, c'est à dire qu'une couche de substance scintillatrice est déposée sur chaque capteur élémentaire.

Ainsi le mouvement relatif entre d'une part l'objet, et d'autre part l'ensemble formé par la source X et le détecteur linéaire, permet de réaliser une image de l'objet qui correspond à l'absorption en transmission du rayonnement X par l'objet. Le long du détecteur linéaire, la définition de cette image dépend du nombre de capteurs élémentaires, alors que parallèlement au mouvement de l'objet, la définition de l'image est donnée par le nombre de mesure effectuée par chaque capteur élémentaire. Le même capteur élémentaire est utilisé pour l'acquisition d'un grand nombre de point d'image, toutes les valeurs de l'image réalisée à l'aide d'un même capteur élémentaire durant l'analyse de l'objet formant une même ligne ou colonne de l'image de cet objet.

Une zone libre du tapis roulant, située en avant du premier objet à examiner est souvent mise à profit pour élaborer un ou des coefficients de correction, notamment pour une correction du gain et pour une correction du signal d'obscurité de chaque capteur élémentaire.

En effet chaque capteur élémentaire possède un gain propre, et délivre un signal d'obscurité propre dû notamment à des courants de fuite électrique. Aussi pour faire une image de bonne qualité , il est nécessaire de corriger chaque valeur de mesure correspondant à un point de l'image, à l'aide de termes correcteurs propres au capteur élémentaire ayant délivré la valeur de mesure.

Pour un capteur surfacique (matrice) une précision de 1 à 3 % sur les termes correcteurs et généralement suffisante, car les effets des erreurs de correction n'ont pas de corrélation entre points de l'image.

Dans le cas d'un détecteur linéaire, le même capteur élémentaire est utilisé pour l'acquisition d'un grand nombre de points qui forment par exemple une ligne de l'image. Une imprécision sur l'acquisition des termes correcteurs propre à chaque capteur élémentaire, affecte une ligne complète de l'image, de telle sorte que les erreurs sur les valeurs des points d'image sont corrélées dans une même ligne. L'oeil est très sensible à de telles erreurs corrélées, ce qui contraint à rechercher des imprécisions sur les coefficients de correction inférieures à 1 % et souvent voisine de 10⁻³.

Pour chaque capteur élémentaire, les termes correcteurs, du courant d'obscurité et du gain sont obtenus en traitant un grand nombre de signaux délivrés par chaque capteur élémentaire, de manière à minimiser les effets du bruit temporaire du capteur élémentaire ou du flux de rayonnement. Ces signaux fournis par chaque capteur peuvent être traités selon une méthode de moyenne vraie, ou encore selon une méthode dite de moyenne glissante ou récursive. Une méthode d'élaboration plus directe d'un terme correcteur pour un capteur est indiquée dans le document de brevet US-A-4 341 956. Ce document décrit notamment comment faire l'acquisition du signal d'obscurité et le mémoriser pour ensuite le soustraire de la valeur de mesure. Mais ceci est réalisé à l'aide de moyens organisés pour traiter les signaux d'un unique capteur et non pour traiter les signaux de plusieurs capteurs élémentaires d'un détecteur linéaire.

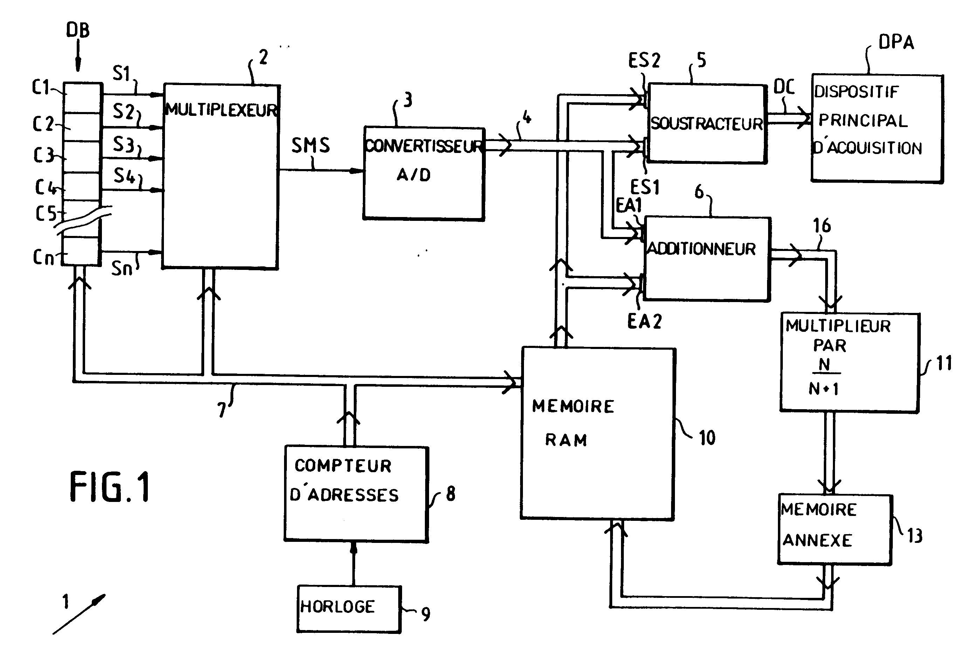

La figure 1 est un schéma par blocs fonctionnels d'un ensemble électronique, ensemble qui permet d'illustrer un procédé de l'art antérieur pour élaborer, et mémoriser, des termes correcteurs destinés à corriger les valeurs des signaux de mesure délivrés par chaque capteur élémentaire d'un détecteur linéaire de radiations.

Dans l'exemple qui est décrit ci-après, on détermine, par une méthode de moyenne glissante, les valeurs de courant d'obscurité de chacun des capteurs d'un détecteur linéaire ou détecteur barrette DB.

Le détecteur linéaire DB est du type par exemple utilisé dans les aéroports pour le contrôle de bagages. Le détecteur linéaire DB comporte une pluralité de capteurs élémentaires C1, C2,..., Cn, disposés sur une seule ligne, et qui sont reliés chacun à un dispositif de commutation électronique ou multiplexeur 2 auquel chacun des capteurs délivre un signal de mesure S1, S2,... Sn. Ces signaux S1 à Sn sont destinés à être appliqués, l'un après l'autre à un convertisseur analogique/numérique 3 auquel est relié le multiplexeur 2 ; à cet effet le multiplexeur 2 sélectionne l'un des signaux S1 à Sn et délivre par sa sortie un signal de mesure sélectionné SMS qui est appliqué au convertisseur analogique /digital 3. Le signal sélectionné SMS est sous une forme analogique, et il est converti en données numériques par le convertisseur 3 ; ces données numériques sont disponibles à la sortie du convertisseur analogique /numérique 3 sur des lignes de liaison parallèles ou bus 4. Le bus 4 est connecté d'une part à un dispositif soustracteur 5, et d'autre part à un dispositif additionneur 6, auxquels il applique les données numériques qui correspondent au signal SMS sélectionné parmi les signaux S1 à Sn délivrés par les capteurs élémentaires C1 à Cn.

Les données transportées par le bus 4 représentent une valeur brute, non corrigée par le terme correcteur, et c'est le soustracteur 5 qui délivre des données corrigées DC qui sont appliquées à un dispositif principal d'acquisition DPA. Ce dispositif d'acquisition DPA a pour fonction, d'une manière conventionnelle, de traiter et mémoriser les données corrigées DC, de manière à construire une image d'un objet (non représenté) formé à l'aide d'un rayonnement X, qui, après avoir traversé cet objet a été converti en lumière de sorte à être capté par les cellules photosensibles de chacun des capteurs élémentaires C1 à Cn.

Pour une bonne compréhension de ce qui suit, il est utile de préciser certains détails de fonctionnement des appareils de contrôle de bagage rayons X. Le fonctionnement de ces appareils peut se décomposer en trois phases :
- dans une première phase, on fait l'acquisition des signaux de mesure S1 à Sn de chacun des capteurs C1 à Cn en l'absence de rayonnement X ; le signal S1 à Sn qui est alors délivré par chacun des capteurs élémentaires correspond au signal d'obscurité ou courant d'obscurité propre a chacun de ces capteurs. Pour chacun de ces capteurs élémentaires, la valeur du courant d'obscurité est déterminée après un grand nombre d'acquisition des signaux S1 à Sn. Ces signaux S1 à Sn sont convertis en données numériques par le même dispositif convertisseur 3, aussi ces acquisitions se font séquentiellement, c'est à dire que l'on traite d'abord le premier signal de mesure S1 puis le second signal S2 et ainsi de suite jusqu'au signal Sn qui est le dernier d'un cycle d'acquisition; et l'on reprend ensuite avec le premier signal S1 lors d'un cycle d'acquisition suivant. A la fin des cycles d'acquisition dans cette première phase, la valeur du terme correcteur pour le courant d'obscurité est figée et peut être utilisée pour être soustraite au niveau du soustracteur 5 de la donnée brute délivrée par le convertisseur 3.
- la seconde phase de fonctionnement peut servir dans le cas d'une correction de gain. A cette fin on effectue un grand nombre de cycle d'acquisition des signaux S1 à Sn délivrés par les capteurs C1 à Cn, en présence d'un rayonnement X, mais sans que l'objet radiographié soit interposé entre le détecteur linéaire DB et la source de rayons X. Ceci correspond à un éclairement de calibration. Il est à noter que le courant I ou signal délivré par un capteur élémentaire, capteur élémentaire de type photosensible par exemple, peut se définir par la relation suivante : I = Iₒ+ k. E, ou Iₒ est le courant d'obscurité c'est-à-dire le courant en l'absence d'éclairement (sans rayonnements X); k est le coefficient ou gain propre à chaque capteur élémentaire, et E est l'éclairement. L'éclairement E est une constante connue, et la valeur du courant d'obscurité Iₒ ayant été déterminée dans la première phase de fonctionnement, on peut déduire la valeur du gain k pour chaque capteur élémentaire et affiner cette valeur par un grand nombre d'acquisition;
- enfin la troisième phase est la phase de mesure dans laquelle l'objet radiographié circule entre la source et le détecteur linéaire. Dans cette phase les signaux S1 à Sn sont corrigés en premier par les termes correcteurs de courant d'obscurité, puis ensuite par les termes correcteurs de gain avant d'être transmis à un dispositif d'acquisition servant à former l'image de l'objet radiographié.

L'ensemble 1 de l'art antérieur montré à titre d'exemple à la figure 1, permet de définir la valeur du courant d'obscurité Iₒ dans une première phase telle que ci-dessus mentionnée, dans laquelle le fonctionnement s'effectue sans rayonnement X.

Le détecteur linéaire DB et le multiplexeur 2 sont connectés à un second réseau de liaison ou bus 7 auquel sont également connectés un compteur d'adresse 8 et une mémoire vive 10 à lecture et écriture (RAM); le compteur d'adresse 8 est synchronisé par une horloge 9, et il a pour fonction notamment de commander avec la phase appropriée les fonctionnements du détecteur linéaire DB, de multiplexeur 2 et de la mémoire RAM 10. Ceci permet par exemple de réinitialiser les potentiels au niveau de chaque capteur C1 à Cn après chaque acquisition du signal de mesure fourni par ces derniers, et d'adresser des cellules mémoires (non représentées) contenues dans la mémoire RAM 10 et qui sont chacune destinées à stocker les données qui correspondent aux informations délivrées par celui des capteurs C1 à Cn auquel elles sont indexées. En résumé, à chaque capteur élémentaire C1 à Cn correspond une cellule mémoire de la mémoire RAM 10, et chacune de ces cellules mémoires contient la combinaison de N valeurs obtenues pour le capteur élémentaire C1 à Cn considéré.

Pendant le cycle d'acquisition des signaux S1 à Sn ou cycle de lecture, toute nouvelle valeur est ajoutée au contenu déjà stocké dans la cellule mémoire correspondante ; ce résultat est ensuite multiplié par un nombre N, puis divisé par N + 1, puis écrit dans la cellule mémoire en lieu et place du nombre précédent. De cette manière, à tout instant chaque cellule mémoire de la mémoire RAM 10 contient la somme pondérée d'un grand nombre d'échantillons. Le coefficient de pondération décroît pour chaque contribution avec son ancienneté. Mathématiquement, ce système est équivalent à un filtre passe bas simple du premier ordre pour chaque pixel; la constante de temps équivalente est : N x T, ou T est la période du cycle d'acquisition.

Ainsi par exemple, à un instant donné ou l'on transmet au convertisseur analogique/numérique 3 un signal de mesure, le signal S1 par exemple délivré par le premier capteur élémentaire C1 : la valeur numérique correspondante est appliquée à une première entrée ES1 du soustracteur 5 ainsi qu'a une première entrée EA1 d'un additionneur 6. Dans le même temps, le compteur d'adresse 8 adresse la mémoire RAM 10 de manière que la valeur contenue dans la cellule mémoire affectée au premier capteur élémentaire C1 soit appliquée à une seconde entrée ES2 du soustracteur 5 et à une seconde entrée EA2 de l'additionneur 6. Cet additionneur 6 fait la somme de la valeur contenue dans la cellule mémoire et de la nouvelle valeur correspondant au dernier signal S1; cette somme, sous forme de données numériques, est appliquée par une liaison 16 (de type bus) à un circuit multiplieur 11 qui réalise sur cette somme l'opération N/N + 1, où N est le nombre d'acquisitions déjà réalisées du signal S1.

La nouvelle valeur définie par le multiplieur 11 est appliquée à la mémoire lecture-écriture RAM 10, par l'intermédiaire d'une mémoire annexe 13, pour être écrite dans la cellule mémoire intéressée en lieu et place de la valeur précédente; la mémoire tampon 13 étant nécessaire pour attendre que la mémoire RAM 10 passe de la phase de "lecture" à une phase d'"écriture".

Durant toute cette première phase, le soustracteur 5 ne fonctionne pas et à la fin de cette phase, les contenus des cellules mémoires de la RAM 10 sont figés et ils constituent les termes correcteurs du courant d'obscurité. Dans une phase suivante, qui peut être celle de l'élaboration des termes correcteurs de gain, les contenus des cellules mémoires de la RAM 10 sont appliqués au soustracteur 5 dans un même ordre que les signaux de mesure S1 à Sn, de tel sorte qu'à chaque valeur de signal S1 à Sn est soustraite la valeur correspondante de courant d'obscurité; le résultat de la soustraction étant une donnée corrigée DC.

Cette partie du fonctionnement où s'effectue la correction est identique au fonctionnement qui s'effectue dans le cas ou la valeur du courant d'obscurité est déterminée par une méthode de moyenne vraie. La méthode, dans le cas de la moyenne vraie est très proche : en effet dans ce cas après digitalisation des signaux, une mémoire numérique (semblable à la RAM 10) adressée par le numéro du capteur élémentaire (ou toutes fonctions bi-univoque de ce numéro) contient la somme de N valeurs successives (N est souvent une puissance de 2). Cette somme est divisée par N (ceci est souvent obtenu par abandon de bits de poids faibles si N est une puissance de 2) afin de constituer une moyenne, et cette moyenne est soustraite à la mesure pour effectuer la correction.

Dans le cas d'une correction de gain, la correction est faite en divisant la mesure par le terme correcteur ainsi obtenu, c'est à dire que le circuit soustracteur est remplacé par un circuit multiplieur .

Parmi les inconvénients que présente la méthode qui vient d'être décrite en référence à la figure 1, il en est un particulièrement fâcheux qui réside dans le fait qu'il est nécessaire d'utiliser un convertisseur analogique/numérique à très grande précision et très grande dynamique : ainsi par exemple il est couramment nécessaire d'utiliser à ce niveau des convertisseurs analogiques/numériques de 12000 points ou plus (c'est-à-dire d'au moins 14 bits). Il en résulte qu'un tel convertisseur est d'un coût considérable pouvant représenter à lui seul environ le tiers du coût de l'ensemble. Un autre point très défavorable vient de ce que le fait d'utiliser un convertisseur analogique/digital à très grande dynamique tend à réduire de façon importante la vitesse de fonctionnement de l'ensemble, et conduit par suite à limiter la vitesse de défilement du tapis roulant sur lequel les objets sont en déplacement, ou à limiter le nombre de cycle d'acquisition pour élaborer les termes correcteurs.

La présente invention concerne un procédé de mesure et de correction de signaux selon la revendication 1. Le procédé de l'invention ne présente pas les inconvénients que comporte les procédés déjà connus, particulièrement en ce qui concerne l'utilisation d'un convertisseur analogique/numérique de très grand dynamique. L'invention concerne également un dispositif permettant la mise en oeuvre du procédé de l'invention selon la revendication 8.

L'invention sera mieux comprise à l'aide de la description qui suit, faite à titre d'exemple non limitatif en référence aux figures annexées, parmi lesquelles :
- la figure 1, déjà décrite, montre le schéma d'un ensemble électronique fonctionnant selon un procédé de l'art antérieur pour corriger les signaux délivrés par un détecteur linéaire de radiations ;
- la figure 2 est le schéma d'un dispositif électronique fonctionnant selon le procédé de l'invention.

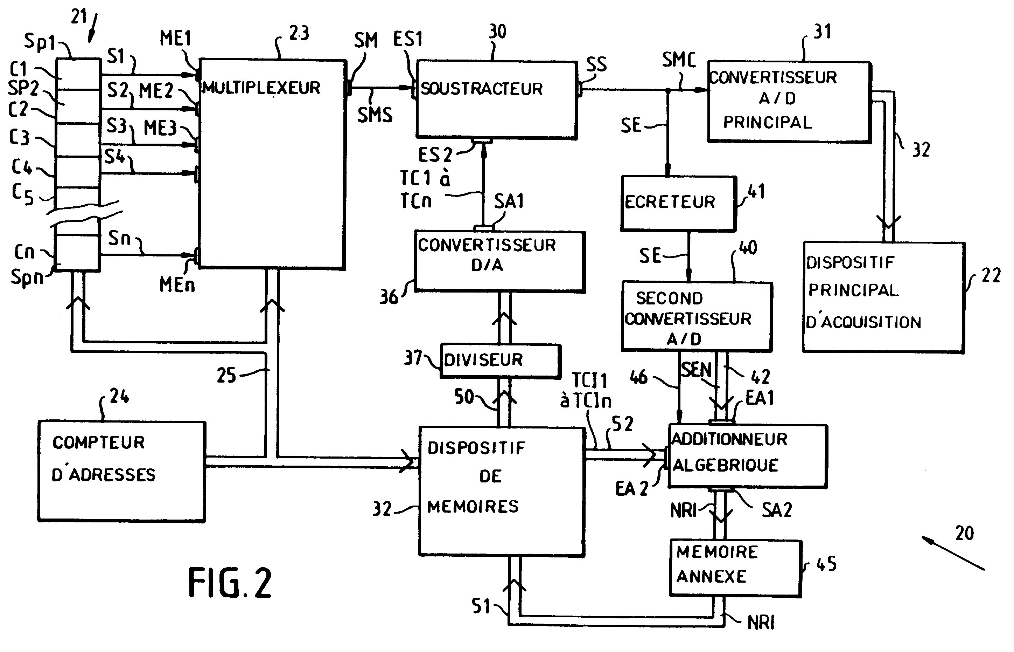

La figure 2 est un schéma par blocs fonctionnels d'un dispositif de correction 20 permettant de mettre en oeuvre le procédé de correction conforme à l'invention. Le procédé de l'invention s'applique à la correction des signaux de mesure S1 à Sn délivré par un détecteur linéaire 21 de radiation, lors de l'acquisition en lecture séquentielle de ces signaux de mesure par un dispositif principal d'acquisition 22.

Dans l'exemple non limitatif de la description, le détecteur linéaire 21 est d'un type semblable à celui déjà décrit en référence à la figure 1, c'est à dire prévu pour être utilisé dans le cadre de l'imagerie à balayage par rayons X, notamment pour le contrôle d'objets dans les aéroports; en conséquence, le détecteur linéaire 21 comporte une pluralité de capteurs élémentaires C1 à Cn formés d'éléments photosensibles et disposés sur une seule ligne, et dont une surface photosensible Sp1 à Spn est revêtue d'une couche d'un matériau scintillateur.

Le dispositif principal d'acquisition a pour fonction de traiter les informations délivrées par chacun des capteurs C1 à Cn pour reconstruire, de manière en elle-même classique, l'image d'un objet ayant été radiographié. Dans l'exemple non limitatif décrit, le procédé de l'invention s'applique particulièrement à la correction du courant d'obscurité de chacun des capteurs C1 à Cn, mais il doit être entendu que l'invention peut s'appliquer également à corriger d'autres paramètres, le gain par exemple des capteurs élémentaires C1 à Cn.

En phase de mesure, la lecture des capteurs élémentaires C1 à Cn, c'est-à-dire l'acquisition des signaux S1 à Sn que délivre ces derniers, par le dispositif principal d'acquisition 22 est réalisée de façon séquentielle. A cet effet, dans l'exemple non limitatif de la description, les capteurs C1 à Cn sont reliés chacun à une entrée ME1 à MEn d'un multiplexeur 23. Le multiplexeur 23 et le détecteur linéaire 21 sont commandés par un compteur d'adresse 24, par l'intermédiaire d'un bus 25, de manière qu'une sortie SM du multiplexeur 23 soit successivement commutée de l'une à la suivante de ces entrées ME1 à MEn, afin de délivrer un signal de mesure sélectionné SMS qui, successivement, correspond à chacun des signaux de mesure S1 à Sn. Il est à noter que l'organisation montrée à la figure 2, entre le détecteur linéaire 21, le multiplexeur 23 et le compteur d'adresse 24 est donnée uniquement à titre d'exemple non limitatif, d'autres agencements pourront être utilisés pour transmettre de façon séquentielle les signaux de mesure S1 à Sn comme par exemple à l'aide d'un registre à décalage (non représenté) à entrées parallèles et à sortie série.

Comme il a été mentionné dans le préambule, la phase de mesure dans laquelle un objet est radiographié intervient après au moins une phase dans laquelle, pour chaque capteur élémentaire C1 à Cn, on élabore un terme correcteur ce terme correcteur est mémorisé et il sert, dans la phase de mesure, à corriger la valeur du signal délivré par le capteur élémentaire C1 à Cn auquel il est indexé.

On rappelle que dans le cas des termes correcteurs définis en fonction du signal d'obscurité ou courant d'obscurité des capteurs élémentaires C1 à Cn , ces termes correcteurs peuvent être utilisés dans une autre phase de correction, autre phase dans laquelle on élabore des termes correcteurs en fonction du gain de chacun des capteurs élémentaires : dans ce cas les termes correcteurs sont élaborés à partir de valeurs déjà corrigées en fonction du signal d'obscurité. Il est à noter que dans certains cas où le signal d'obscurité peut être considéré comme négligeable, les signaux des capteurs élémentaires peuvent être traités de manière à élaborer directement les termes correcteurs en fonction du gain.

L'exemple de la figure 2 illustre l'application de l'invention à la correction du courant d'obscurité, et par suite le dispositif de correction 20 comprend des moyens de correction qui comportent un élément soustracteur 30. Ce soustracteur 30 permet pour chaque capteur C1 à Cn de retrancher la valeur d'un terme correcteur, propre à chaque capteur, de la valeur du signal de mesure S1 à Sn délivré par le capteur élémentaire considéré. A cet effet, le signal de mesure sélectionné SMS délivré en sortie SM du multiplexeur 23 est appliqué à une première entrée ES1 du soustracteur 30, et une seconde entrée ES2 de ce soustracteur reçoit le terme correcteur TC1 à TCn, correspondant au capteur élémentaire C1 à Cn dont le signal de mesure est à cet instant transmis au soustracteur 30.

Selon une caractéristique de l'invention, la correction des signaux délivrés par chacun des capteurs élémentaires C1 à Cn s'effectue quand ces signaux sont sous une forme analogique. Par suite, le soustracteur 30 est lui même un moyen analogique, un amplificateur différentiel classique par exemple. Une sortie SS du soustracteur 30 délivre sous forme analogique un signal de mesure corrigé SMC, et ce signal de mesure corrigé est appliqué à un convertisseur analogique/numérique 31 appelé convertisseur principal, lequel convertisseur principal convertit la valeur analogique du signal de mesure corrigé SMC en données numériques qui sont transmises, par une liaison 32 de type bus, au dispositif principal d'acquisition 22.

Dans ces conditions le soustracteur 30 qui dans l'exemple non limitatif représente les moyens de correction, opère en analogique, et par conséquent il préserve la dynamique du convertisseur principal 31, en lui permettant de convertir uniquement la plage utile des variations du signal, à l'exclusion des tensions de décalage dues au courant d'obscurité. Il en résulte que le convertisseur principal 31 peut avoir un nombre de bits beaucoup plus faible que dans l'art antérieur par exemple 8 à 12 au lieu de 14, ce qui permet de diviser par environ 5 à 10 le coût de cet élément, et qui en outre permet d'augmenter la vitesse de fonctionnement de l'ensemble.

Les signaux de mesure corrigés SMC sont convertis en valeur numériques qui sont transmises au dispositif principal d'acquisition 22 dans la phase de mesure, et dans cette phase le terme correcteur propre à chaque capteur élémentaire C1 à Cn est déjà défini, c'est-à-dire qu'une valeur correctrice stockée dans une cellule mémoire affectée à chaque capteur est déjà figée. C'est au cours d'une phase qui précède que sont élaborées les valeurs correctrices propres à chaque capteur élémentaire C1 à Cn, et dans cette phase ces valeurs correctrices peuvent être modifiées d'un cycle d'acquisition à un cycle d'acquisition suivant.

On appelle cycle d'acquisition une séquence dans laquelle on lit successivement tous les capteurs élémentaires C1 à Cn après que ces derniers aient été exposés aux radiations un même intervalle de temps; ces cycles d'acquisition sont répétés les uns après les autres pendant le mouvement relatif entre l'objet et l'ensemble source-détecteur linéaire, de telle sorte qu'à chaque cycle d'acquisition de mesure est fourni un nouveau signal de mesure S1 à Sn par chacun des capteurs élémentaires C1 à Cn .

Dans la version du procédé de l'invention décrite à titre d'exemple non limitatif, le terme correcteur TC est déterminé selon une méthode de type à moyenne récursive. Chaque terme correcteur TC1 à TCn est mémorisé dans une cellule mémoire (non représentée) affectée à chaque capteur élémentaire C1 à Cn. Les cellules mémoires sont contenues dans un dispositif de mémoire 32 de type numérique à mémoire vive lecture/écriture (mémoire R. A. M.), chaque cellule mémoire ayant une adresse qui est fonction du numéro du capteur élémentaire C1 à Cn auquel elle correspond. Le compteur d'adresse 24 est relié au dispositif de mémoire 32 par les liaisons 25 de type bus de manière que la cellule mémoire adressée soit celle qui correspond au capteur élémentaire C1 à Cn dont le signal de mesure est au même moment appliqué à la première entrée ES1 du soustracteur 30.

Pour élaborer un terme correcteur, le fonctionnement est le suivant :
- au départ, c'est à dire lors du premier cycle d'acquisition ou lecture des capteurs C1 à Cn, pour chacun de ces capteurs la cellule mémoire correspondante contient une donnée de valeur arbitraire ; cette donnée arbitraire numérique est convertie en valeur analogique par un convertisseur numérique/analogique 36, de préférence (mais non obligatoirement) après avoir été divisée par un diviseur 37 dont le rôle sera expliqué dans la suite de la description. Cette valeur numérique convertie en valeur analogique par le convertisseur 36 est délivrée par une sortie SA1 de ce dernier, et elle constitue alors un résultat intermédiaire ou terme correcteur intermédiaire qui est appliqué à la seconde entrée ES2 du soustracteur 30. Le soustracteur 30 soustrait la valeur du terme correcteur intermédiaire de la valeur du signal de mesure S1 à Sn représenté par le signal de mesure sélectionné SMS. Le signal de mesure corrigé SMC délivré par la sortie SS du soustracteur 30 constitue dans cette phase un signal d'erreur SE qui est appliqué à un second convertisseur analogique/numérique 40, soit directement, soit par l'intermédiaire d'un dispositif écrêteur 41 dont la présence est souhaitable mais pas Indispensable, comme il est expliqué davantage dans la suite de la description.

Le second convertisseur analogique/numérique 40 doit être de préférence un convertisseur rapide, mais à ce niveau il peut être de faible dynamique avec un faible nombre de bits, (et donc de faible coût) du fait qu'il ne travaille pas sur tout le signal, mais seulement sur la différence entre la valeur du signal SMS appliqué à la première entrée ES 1 du soustracteur 30 et la valeur du terme correcteur intermédiaire appliqué à la seconde entrée ES2 ; cette différence constituant alors le signal d'erreur SE. Ce signal d'erreur SE est converti par le second convertisseur analogique/numérique 40 en un signal d'erreur numérique SEN qui, par une liaison 42 de type bus, est appliqué à un élément 43 remplissant d'une manière en elle-même classique la fonction d'additionneur algébrique. Dans l'exemple non limitatif décrit, le second convertisseur analogique/numérique 40 est relié en outre par une liaison 46 à l'additionneur algébrique 43 afin de fournir à ce dernier le signe + ou - dont est affecté le signal d'erreur SE.

Il est à noter d'une part que le soustracteur 30 peut être constitué, comme il a été précédemment mentionné, à l'aide d'un amplificateur analogique, lequel peut délivrer en sortie 55 un signal d'erreur SE positif ou négatif par rapport à une tension de référence ; d'autre part, ce signal d'erreur peut être superposé à une tension de référence pour être appliqué au second convertisseur analogique/numérique 40, de telle manière que ce dernier peut être utilisé dans le mode "à zéro central". Dans le fonctionnement "à zéro central", d'une façon en elle-même conventionnelle, l'un des bits peut servir à indiquer le signe du signal à convertir (le plus souvent c'est le bit du poids le plus fort), et les autres bits servent à coder en mode binaire la valeur de ce signal.

L'additionneur algébrique 43 reçoit sur une première entrée EA1 la valeur numérisée du signal d'erreur SE, et il reçoit sur une seconde entrée EA2 une valeur numérique qui est la valeur du terme correcteur intermédiaire TCI1 à TCIn ou résultat intermédiaire contenu dans la cellule mémoire du dispositif mémoire 32, la cellule mémoire étant celle qui est en cours d'adressage, c'est à dire la mémoire qui est affectée au capteur élémentaire C1 à Cn dont le signal de mesure a été appliqué au soustracteur 30 pour former le signal d'erreur SE.

On fait l'addition algébrique du signal d'erreur numérisé SEN et du résultat intermédiaire TCI contenu dans la cellule mémoire. On obtient alors en sortie SA2 de l'additionneur algébrique 43, pour le même capteur élémentaire C1 à Cn, un nouveau résultat intermédiaire NRI qui peut être inscrit dans la cellule mémoire en lieu et place du résultat intermédiaire précédent. A cet effet, le nouveau résultat intermédiaire NRI est appliqué au dispositif de mémoire 32 par l'intermédiaire d'une mémoire annexe 45; la mémoire annexe 45 permet d'une manière en elle-même classique de mémoriser le nouveau résultat intermédiaire NRI le temps qui est nécessaire à faire passer le dispositif de mémoire 32 de "lecture" à "écriture". Il est à noter à ce propos que pour une meilleur compréhension des fonctions sur la figure 2, d'une part le dispositif de mémoire 32 est relié à l'additionneur algébrique 43 par une liaison 52 de type bus afin de lui transmettre le résultat intermédiaire TCI1 à TCIn contenu dans la mémoire adressée, et que d'autre part la mémoire annexe 45 est reliée au dispositif de mémoire 32 par une liaison 51 de type bus également afin de lui transmettre le nouveau résultat intermédiaire NRI qui doit être écrit dans la cellule mémoire ; mais bien entendu ces deux liaisons 52, 51, sont en pratique reliées entre elles, et elles sont ici différenciées seulement par le fait que la liaison 51 entre la mémoire tampon et le dispositif de mémoire 32 correspond à une phase d'écriture, et que la liaison 52 entre le dispositif de mémoire 32 et l'additionneur algébrique 43 correspond à une phase de lecture, de même d'ailleurs qu'une liaison 50 de type bus reliant le dispositif de mémoire 32 au diviseur 37.

Ce fonctionnement est répété dans un même cycle d'acquisition ou lecture pour tous les capteurs élémentaires C1 à Cn , et il est répété sur un grand nombre de séquences de lecture successives, tant que dure la phase d'élaboration du terme correcteur. A la fin de cette phase le contenu de chaque cellule mémoire est figé et constitue un terme correcteur TC qui peut être utiliser pour faire la soustraction.

En phase d'élaboration du terme correcteur, le signal d'erreur SE étant numérisé puis ajouté algébriquement au contenu de la cellule mémoire à chaque cycle de lecture, on obtient après de multiples actions successives une annulation de l'erreur, le contenu de la cellule mémoire est équivalent à l'intégrale des erreurs.

Pour chaque capteur élémentaire, le contenu de la cellule élémentaire correspondante tend vers le produit d'une constante A par la valeur moyenne de la mesure. La constante A est le nombre diviseur par lequel on peut éventuellement, dans le diviseur 37, diviser les termes correcteurs et les résultats intermédiaires délivrés par une cellule mémoire élémentaire du dispositif de mémoire 32, avant de servir à la soustraction dans le soustracteur 30. Cette division a pour but d'augmenter la constante de temps de la boucle formée par le soustracteur 30, l'additionneur algébrique 43 et le dispositif de mémoire 32, de manière à intégrer une forte variation de la valeur d'un signal de mesure par rapport à des signaux de mesure précédents délivrés par le même capteur, et afin d'éviter de produire un signal d'erreur SE trop important. Cette division est symbolisée sur la figure 2 par le diviseur 37, mais en pratique elle peut être réalisée de manière simple par abandon des bits binaires de plus faibles poids entre la sortie du dispositif de mémoire 32 et l'entrée du convertisseur numérique/analogique 36 ; bien entendu dans ce cas la constante A doit être une puissance de 2. Il est à noter que le contenu d'une cellule mémoire tend vers A multiplié par la valeur moyenne de la mesure, avec une constante de temps égale à T.A/2 ^{n1 - n2}; où T est le temps d'un cycle de lecture ; n1 et n2 sont respectivement le nombre de bits du convertisseur numérique/analogique 36 et du convertisseur analogique/numérique 40.

Le convertisseur numérique/ analogique peut être un convertisseur rapide (quelques centaines de nanosecondes par exemple) fonctionnant avec un grand nombre de bits (12 bits), de tels convertisseurs rapides digitaux/analogiques à grandes nombres de bits étant disponibles sur le marché à des coûts raisonnables.

La fonction d'écrêtement ou écrêtage du signal d'erreur SE classique en elle-même, symbolisée par l'écrêteur 41, consiste à limiter le signal d'erreur SE en positif et en négatif par rapport à la tension de référence déjà mentionnée, délivrée par la sortie SS du soustracteur 30. Cet écrêtement a pour but de protéger le second convertisseur analogique/numérique des éventuels dépassements de valeurs du signal d'erreur SE par rapport à la capacité de ce convertisseur.

Le procédé de correction conforme à l'invention permet d'opérer avec une grande dynamique d'action sans compromettre la rapidité de fonctionnement, et il permet de réduire de manière considérable le coût du convertisseur analogique/numérique principal en profitant de l'existence et du coût raisonnable des convertisseurs rapides digitaux/analogiques à grands nombres de bits; le convertisseur rapide analogique/numérique utilisé pour traiter le signal d'erreur SE pouvant par ailleurs être lui-même de faible dynamique (faible nombre de bits) et donc aussi de faible coût.

## Revendications

1. Procédé de mesure et correction de signaux (S1 à Sn) issus d'un détecteur linéaire (21) de radiations, et transmis séquentiellement à une chaîne de traitement de signal, le détecteur linéaire (21) comportant des capteurs élémentaires (C1 à Cn) délivrant lesdits signaux sous forme analogique, le procédé comportant une phase d'élaboration d'un terme correcteur propre à chacun des capteurs élémentaires (C1 à Cn), chaque terme correcteur étant mémorisé au cours de cette phase sous forme numérique dans une cellule mémoire propre au capteur élémentaire correspondant, le procédé consistant ensuite, dans une phase d'acquisition des signaux (S1 à Sn), à opérer une correction de la valeur de chacun des signaux (S1 à Sn) en fonction de la valeur du terme correcteur correspondant, les signaux de mesure corrigés (SMC) étant transmis à un dispositif d'acquisition (22), le procédé étant caractérisé en ce qu'il consiste à effectuer séquentiellement sous forme analogique la correction des signaux analogiques issus des différents capteurs (S1 à Sn) par les termes correcteurs respectifs issus des cellules mémoires et convertis en signaux analogiques, et à convertir les signaux de mesure corrigés (SMC) en données numériques à l'aide d'un convertisseur analogique/numérique principal (31) pour les transmettre au dispositif d'acquisition (22).

2. Procédé selon la revendication 1, caractérisé en ce que dans la phase d'élaboration des termes correcteurs, les capteurs élémentaires (C1 à Cn) étant lus séquentiellement plusieurs fois jusqu'à l'obtention des termes correcteurs, il consiste à chaque fois et pour chaque capteur élémentaire, à élaborer des termes intermédiaires qui sont convertis chacun en données numériques à l'aide d'un second convertisseur analogique/numérique afin d'être chacun mémorisé dans la cellule mémoire attribuée au capteur élémentaire intéressé, le second convertisseur analogique/numérique (40) ayant une dynamique inférieure à la dynamique du convertisseur analogique/numérique principal (31).

3. Procédé selon l'une des revendications précédentes, caractérisé en ce que la correction réalisée est une correction d'un courant d'obscurité des capteurs élémentaires (C1 à Cn) qui consiste à soustraire la valeur du terme correcteur de la valeur du signal de mesure.

4. Procédé selon l'une des revendications précédentes, la correction étant réalisée sur le principe d'une moyenne récursive, caractérisé en ce que pour élaborer un terme correcteur il consiste à faire la différence en analogique entre le signal de mesure (S1 à Sn) et le terme intermédiaire, puis à convertir cette différence (SE) analogique en données numériques à l'aide d'un convertisseur analogique/numérique (40) et à en faire l'addition algébrique avec le terme intermédiaire contenu dans la mémoire élémentaire, de sorte à former un nouveau résultat intermédiaire qui est mémorisé en lieu et place du résultat intermédiaire précédent.

5. Procédé selon la revendication 4, caractérisé en ce qu'il consiste à soustraire le terme de correction du signal de mesure avec un même moyen soustracteur (30) que celui qui réalise la différence entre le signal de mesure (S1 à Sn) et le résultat intermédiaire.

6. Procédé selon la revendication 4, caractérisé en ce que le second convertisseur analogique/numérique (40) fonctionne selon un principe de zéro central.

7. Procédé selon l'une des revendications précédentes, caractérisé en ce que le soustracteur (30), le second convertisseur analogique/numérique (40), l'additionneur algébrique (43), les cellules mémoires (32) constituent une boucle fermée, et en ce qu'un convertisseur numérique/analogique (36) est disposé entre les cellules mémoires et le soustracteur (30).

8. Dispositif pour la mise en oeuvre du procédé selon l'une des revendications 1 à 7, comportant :
- un détecteur linéaire de radiations comportant des capteurs élémentaires (C1 à Cn) délivrant des signaux de mesure sous forme analogique (S1 à Sn)
- des moyens (23) pour transmettre séquentiellement les signaux de mesure,
- des moyens pour élaborer un terme correcteur propre à chaque capteur élémentaire (C1 à Cn), ces moyens comprenant une cellule de mémoire respective pour chaque terme,
- des moyens (30) pour effectuer une correction de chaque signal de mesure reçu séquentiellement, en utilisant le terme correcteur respectif,
- un convertisseur analogique/numérique (31) servant à transmettre les signaux corrigés (SMC) à un dispositif d'acquisition (22),
caractérisé en ce que les signaux sont et corrigés (SMC) et délivrés sous forme analogique par les moyens de correction (30), l'entrée du convertisseur analogique/numérique (31) étant reliée à la sortie des moyens de correction (30).

9. Dispositif selon la revendication 8, caractérisé en ce que les moyens de correction (30) font partie également des moyens (40, 43, 32) pour élaborer les termes correcteurs.

10. Dispositif selon l'une des revendications 8 ou 9, caractérisé en ce que les moyens (40, 43, 32) pour élaborer les termes correcteurs comportent un second convertisseur analogique/numérique (40) ayant une dynamique plus faible que le premier convertisseur analogique/numérique (31).

## Claims

1. Procedure for measuring and correcting signals (S1 to Sn) arising from a linear radiation detector (21) and transmitted sequentially to a signal processing chain, the linear detector (21) including elementary sensors (C1 to Cn) delivering the said signals in analog form, the procedure including a phase for computing a corrector term specific to each of the elementary sensors (C1 to Cn), each corrector term being stored during this phase in digital form in a memory cell specific to the corresponding elementary sensor, the procedure consisting subsequently, in a phase of acquisition of the signals (S1 to Sn) in effecting a correction of the value of each of the signals (S1 to Sn) as a function of the value of the corresponding corrector term, the corrected measurement signals (SMC) being transmitted to an acquisition apparatus (22), the procedure being characterized in that it consists in performing sequentially in analog form the correction of the analog signals arising from the various sensors (S1 to Sn) through the respective corrector terms arising from the memory cells and converted into analog signals, and in converting the corrected measurement signals (SMC) into digital data with the aid of a main analog/digital convertor (31) in order to transmit them to the acquisition apparatus (22).

2. Procedure according to Claim 1, characterized in that, in the corrector term computing phase, the elementary sensors (C1 to Cn) being read sequentially plural times until the corrector terms are obtained, it consists each time and for each elementary sensor, in computing intermediate terms which are each converted into digital data with the aid of a second analog/digital convertor so as to be each stored in the memory cell allocated to the relevant elementary sensor, the second analog/digital convertor (40) having a dynamic range which is less than the dynamic range of the main analgo/digital convertor (31).

3. Procedure according to one of the preceding claims, characterized in that the correction carried out is a correction of a dark current of the elementary sensors (C1 to Cn) which consists in substracting the value of the corrector term from the value of the measurement signal.

4. Procedure according to one of the preceding claims, the correction being carried out around the principle of a recursive average, characterized in that, in order to compute a corrector term, it consists in forming the analog difference between the measurement signal (S1 to Sn) and the intermediate term, in then converting this analog difference (SE) into digital data with the aid of an analog/digital convertor (40) and in forming the algebraic addition thereof with the intermediate term contained in the elementary memory, so as to produce a new intermediate result which is stored instead of the previous intermediate result.

5. Procedure according to Claim 4, characterized in that it consists in subtracting the correction term from the measurement signal with the same subtractor means (30) as that which produces the difference between the measurement signal (S1 to Sn) and the intermediate result.

6. Procedure according to Claim 4, characterized in that the second analog/digital convertor (40) operates according to a central zero principle.

7. Procedure according to one of the preceding claims, characterized in that the subtractor (30), the second analog/digital convertor (40), the algebraic adder (43), the memory cells (32) constitute a closed loop, and in that a digital/analog convertor (36) is arranged between the memory cells and the subtractor (30).

8. Apparatus for the implementation of the procedure according to one of Claims 1 to 7, including:
- a linear radiation detector including elementary sensors (C1 to Cn) delivering measurement signals (S1 to Sn) in analog form
- means (23) for transmitting the measurement signals sequentially,
- means for computing a corrector term specific to each elementary sensor (C1 to Cn), these means comprising a respective memory cell for each term,
- means (30) for performing a correction of each sequentially received measurement signal, by using the respective corrector term,
- an analog/digital convertor (31) serving to transmit the corrected signals (SMC) to an acquisition apparatus (22),
characterized in that the signals (SMC) are corrected and delivered in analog form by the correction means (30), the input of the analog/digital convertor (31) being connected to the output of the correction means (30).

9. Apparatus according to Claim 8, characterized in that the correction means (30) also form part of the means (40, 43, 32) for computing the corrector terms.

10. Apparatus according to either of Claims 8 or 9, characterized in that the means (40, 43, 32) for computing the corrector terms include a second analog/digital convertor (40) having a smaller dynamic range than the first analog/digital convertor (31).

## Patentansprüche

1. Verfahren zum Messen und Korrigieren von Signalen (S1 bis Sn), die von einem linearen Strahlungsdetektor (21) ausgegeben und nacheinander an eine Signalverarbeitungskette übertragen werden, wobei der lineare Detektor (21) elementare Meßfühler (C1 bis Cn) aufweist, die die Signale in analoger Form ausgeben, wobei das Verfahren eine Phase der Entwicklung eines eigenen Korrekturterms für jeden der elementaren Meßfühler (C1 bis Cn) aufweist, wobei jeder Korrekturterm im Verlauf dieser Phase in digitaler Form in einer Speicherzelle gespeichert wird, die dem entsprechenden elementaren Meßfühler zugehört, wobei das Verfahren anschließend darin besteht, daß in einer Phase der Erfassung der Signale (S1 bis Sn) in Abhängigkeit vom Wert des entsprechenden Korrekturterms eine Korrektur des Wertes eines jeden der Signale (S1 bis Sn) ausgeführt wird, wobei die korrigierten Meßsignale (SMC) an eine Erfassungseinrichtung (22) übertragen werden, wobei das Verfahren dadurch gekennzeichnet ist, daß es darin besteht, die Korrektur der von den verschiedenen Meßfühlern (S1 bis Sn) ausgegebenen analogen Signale nacheinander in analoger Form durch die jeweiligen Korrekturterme, die von den Speicherzellen ausgegeben und in analoge Signale umgewandelt worden sind, auszuführen, und die korrigierten Meßsignale (SMC) mit Hilfe eines Haupt-Analog-/Digitalumsetzers (31) in digitale Daten umzuwandeln, um sie an die Erfassungseinrichtung (22) zu übertragen.

2. Verfahren gemäß Anspruch 1, dadurch gekennzeichnet, daß es in der Phase der Entwicklung der Korrekturterme dann, wenn die elementaren Meßfühler (C1 bis Cn) nacheinander mehrmals gelesen worden sind, bis die Korrekturterme erhalten werden, darin besteht, jedesmal und für jeden elementaren Meßfühler Zwischenterme zu entwickeln, die jeweils mit Hilfe eines zweiten Analog-/Digitalumsetzers in digitale Daten umgewandelt werden, um in der dem betrachteten elementaren Meßfühler zugeordneten Speicherzelle gespeichert zu werden, wobei der zweite Analog-/Digitalumsetzer (40) eine Dynamik besitzt, die geringer als die Dynamik des Haupt-Analog-/Digitalumsetzers (31) ist.

3. Verfahren gemäß einem der vorangehenden Ansprüche, dadurch gekennzeichnet, daß die ausgeführte Korrektur eine Korrektur eines Dunkelstroms der elementaren Meßfühler (C1 bis Cn) ist, die darin besteht, den Wert des Korrekturterms vom Wert des Meßsignals zu subtrahieren.

4. Verfahren gemäß einem der vorangehenden Ansprüche, wobei die Korrektur anhand des Prinzips einer rekursiven Mittelung ausgeführt wird, dadurch gekennzeichnet, daß es für die Entwicklung eines Korrekturterms darin besteht, daß die analoge Differenz zwischen dem Meßsignal (S1 bis Sn) und dem Zwischenterm gebildet wird, daß dann diese analoge Differenz (SE) mit Hilfe eines Analog-/Digitalumsetzers (40) in digitale Daten umgewandelt wird und daß deren algebraische Addition zu dem im elementaren Speicher enthaltenen Zwischenterm ausgeführt wird, derart, daß ein neues Zwischenergebnis gebildet wird, das anstatt und anstelle des vorhergehenden Zwischenergebnisses gespeichert wird.

5. Verfahren gemäß Anspruch 4, dadurch gekennzeichnet, daß es darin besteht, mit demselben Subtraktionsmittel (30) wie dem, das die Differenz zwischen dem Meßsignal (S1 bis Sn) und dem Zwischenergebnis bildet, den Korrekturterm vom Meßsignal zu subtrahieren.

6. Verfahren gemäß Anspruch 4, dadurch gekennzeichnet, daß der zweite Analog-/Digitalumsetzer (40) nach einem Mittennullpunktsprinzip arbeitet.

7. Verfahren gemäß einem der vorangehenden Ansprüche, dadurch gekennzeichnet, daß der Subtrahierer (30), der zweite Analog-/Digitalumsetzer (40), der algebraische Addierer (43) und die Speicherzellen (32) eine geschlossene Schleife bilden und daß zwischen den Speicherzellen und dem Subtrahierer (30) ein Digital-/Analog-Umsetzer (36) angeordnet ist.

8. Einrichtung zur Ausführung des Verfahrens gemäß einem der Ansprüche 1 bis 7, mit:
- einem linearen Strahlungsdetektor, der elementare Meßfühler (C1 bis Cn) aufweist, die Meßsignale in analoger Form (S1 bis Sn) ausgeben,
- Mitteln (23) für die sequentielle Übertragung der Meßsignale,
- Mitteln zum Entwickeln eines eigenen Korrekturterms für jeden elementaren Meßfühler (C1 bis Cn), wobei diese Mittel für jeden Term jeweils eine Speicherzelle enthalten,
- Mitteln (30) zum Ausführen einer Korrektur eines jeden sequentiell empfangenen Meßsignals unter Verwendung des entsprechenden Korrekturterms,
- einem Analog-/Digitalumsetzer (31), der dazu dient, die korrigierten Signale (SMC) an eine Erfassungseinrichtung (22) zu übertragen,
dadurch gekennzeichnet, daß die Signale durch die Korrekturmittel (30) in analoger Form korrigiert (SMC) und ausgegeben werden, wobei der Eingang des Analog/Digitalumsetzers (31) mit dem Ausgang der Korrekturmittel (30) verbunden ist.

9. Einrichtung gemäß Anspruch 8, dadurch gekennzeichnet, daß die Korrekturmittel (30) auch einen Teil der Mittel (40, 43, 32) zur Entwicklung der Korrekturterme bilden.

10. Einrichtung gemäß einem der Ansprüche 8 oder 9, dadurch gekennzeichnet, daß die Mittel (40, 43, 32) zur Entwicklung der Korrekturterme einen zweiten Analog/Digitalumsetzer (40) enthalten, der eine geringere Dynamik als der erste Analog/Digitalumsetzer (31) besitzt.
